# EUROPEAN PATENT APPLICATION

(11) **EP 3 425 638 A2**
(43) Date of publication of application: **09.01.2019**
(21) Application number: 18185763.2
(22) Date of filing: 26.02.2014
(51) Int. Cl.: G21B 3/00

(54) **CONTROL OF LOW ENERGY NUCLEAR REACTIONS IN HYDRIDES, AND AUTONOMOUSLY CONTROLLED HEAT GENERATION MODULE**

(30) Priority: 26.02.2013 US 201361769643 P
(62) Divisional of application: 14785797.3
(71) Applicant: Brillouin Energy Corp., CA 94705 (US)
(72) Inventor: Godes, Robert E, Berkeley, California 94705 (US); Correia, David, Berkeley, California 94705 (US); Gremban, Ronald D, Berkeley, California 94705 (US)
(74) Representative: Gill Jennings & Every LLP

(57) **Abstract**

A treatment of a possibly powdered, sintered, or deposited lattice (e.g., nickel) for heat generating applications and a way to control low energy nuclear reactions ("LENR") hosted in the lattice by controlling hydride formation. The method of control and treatment involves the use of the reaction lattice, enclosed by an inert cover gas such as argon that carries hydrogen as the reactive gas in a non-flammable mixture. Hydrogen ions in the lattice are transmuted to neutrons as discussed in U.S. Patent Application Publication No. 2007/0206715 (Godes_2007)). Hydrogen moving through the lattice interacts with the newly formed neutrons generating an exothermic reaction.

## Description

### CROSS REFERENCE TO RELATED APPLICATIONS

This application claims priority from U.S. Patent Application No. 61/769,643, filed February 26, 2013 for "Control of Low Energy Nuclear Reactions in Hydrides, and Autonomously Controlled Heat Generation Module" (inventors Robert E. Godes, David Correia, and Ronald D. Gremban).

This application is related to U.S. Patent Application No. 11/617,632 filed December 28, 2006 for "Energy Generation Apparatus and Method" (inventor Robert E. Godes), published September 6, 2007 as U.S. Patent Application Publication No. 2007/0206715 (referred to as Godes_2007)

The entire disclosures of all the above mentioned applications are hereby incorporated by reference for all purposes.

### BACKGROUND OF THE INVENTION

The present invention relates generally to the creation of industrially useful heat energy using hydride lattice material, as exemplified by the following references:
- Godes_2007;
- U.S. Patent Publication No. 2011/0005506 for "Method and Apparatus for Carrying out Nickel and Hydrogen Exothermal Reaction" published January 13, 2011 (Andrea Rossi; U.S. Patent Application No. 12/736,193 filed August 4, 2009, referred to as Rossi_2011); and
- U.S. Patent Publication No. 2011/0249783 for "Method for Producing Energy and Apparatus Therefor" published October 13, 2011 (Francesco Piantelli; U.S. Patent Application No. 13/126,247 filed November 24, 2009, referred to as Piantelli_2011).

In this area, Godes_2007 describes a regime that is believed to operate on the basis of successive electron capture in protons with subsequent neutron absorption in hydrogen isotopes. Rossi_2011 describes an amount of nickel that is transmuted to copper by proton capture. Rossi has announced the commercialization of a device called the E-Cat (short for Energy Catalyzer).

### SUMMARY OF THE INVENTION

Embodiments generate thermal energy by neutron generation, neutron capture, and subsequent transport of excess binding energy as useful heat for any application. Embodiments provide an improved treatment of a lattice such as those described in Godes_2007 (referred to as a core in Godes_2007), or of a powdered or sintered metal lattice, or a deposited metal surface, (e.g., nickel) for heat generating applications and an improved way to control low energy nuclear reactions ("LENR") hosted in the lattice by controlling hydride formation. The method of control and treatment involves the use of a lattice, which can be solid, finely powdered, sintered, or deposited material as the reaction lattice, immersed in a stream of gas consisting of a possible inert cover gas such as argon along with hydrogen as the reactive gas in a non-flammable mixture.

Thermal energy production devices according to embodiments of the present invention produce no noxious emissions and use hydrogen dissolved in transition metals or suitable lattice material. This may include any hydrogen-containing lattice as fuel. It is known that hydrogen is absorbed in nickel and other transition metals given appropriate temperature, pressure and confinement conditions. Further, it is known that intermetallic hydrides form more easily from transition metal powders than from plates or wires or other solid forms of metals. While such high-surface-area lattices are preferred, embodiments of the present invention can make use of solid lattices as well.

A hydride reactor includes a solid lattice, or a powdered or sintered lattice or deposited (e.g., spray-coated or electroplated) material - always included here as a possibility when referring to the "lattice" - which can absorb hydrogen nuclei, a gas loading source to provide the hydrogen species nuclei which are converted to neutrons, an inert carrier gas to control the equilibrium point of the saturation of the hydrogen nuclei within the reaction lattice, a source of phonon energy (e.g., heat, electrical, sonic), and a control mechanism to start and stop stimulation by phononic energy and/or the loading / de-loading of reactant (also referred to as fuel) gas in the lattice material. The lattice transmits phonon energy sufficient to influence proton-electron capture.

By controlling the level of phononic energy and controlling the loading and migration of light element nuclei into and through the lattice, energy released by neutron captures may be controlled. Selecting the un-powered state of valves within the system makes it possible to have a system with passive shut down on loss of power and to have active control over the rate of reactions in the hydrides enclosed by the system. It is further possible to use a passive thermostatic switch to force shutdown of the reactor if the control system malfunctions.

Transmutation of the lattice, which is undesirable as it degrades it over time, can be reduced and perhaps avoided if sufficiently high populations of dissolved hydrogen ions are constantly migrating in the lattice. These hydrogen ions interact in one of two ways: by electron capture or by neutron capture, with the newly formed neutrons forming deuterons, tritons, or H⁴. The neutrons are formed from protons that have captured electrons by absorption of sufficient energy for transmutation from separate proton and electron to neutron. When enough ions are present and in motion in the metal lattice, hydrogen ions will capture the newly formed neutrons with higher probability than will lattice nuclei or other elements present in the lattice. Embodiments of the present invention can thereby reduce and overcome capture by the metal lattice nuclei as well as avoid scenarios in which the reactions run away and melt down the reaction lattice or container holding the reactive material whether it is Ni or any other material that hosts the reaction discussed in Godes_2007, or Rossi_2011, or Piantelli_2011.

These deuterons can absorb an electron to become a neutron pair, which will also very likely be captured by an hydrogen ion to become a triton or H⁴. However, H⁴ is unstable and quickly (with a half life of 30 ms) emits an electron to become an atom of He⁴, thereby releasing considerable phonon energy. This whole hydrogen-to-helium transmutation process can continue without transmuting and degrading the matrix itself because, when enough hydrogen ions are present and in motion in the lattice, each new neutron or cluster of neutrons is more likely to be captured by a hydrogen ion (and release energy) than by an atom of the matrix material (which would transmute the matrix).

As will be described below, a system includes an enclosure for high-surface-area lattice material such as powdered nickel, a source of gas(es), gas inlets, preferably a pump system, gas exit vent, measurement instrumentation, and a control system. The carrier gas may also function as a working fluid to transport heat from the enclosed lattice material delivered to a heat exchanger and returned to the reaction area. The carrier gas with a variable hydrogen concentration allows the metal particles to behave safely as fluidized particles behave in a fluidized bed although in many cases it is not necessary to fluidize the material. It may also be possible to use porous sintered material or a layer deposited on the inside surface of the reactor, on a non-reactive matrix, or on particles composed of a non-reactive or another reactive material to prevent sintering or clumping of the reaction particles.

While nickel is being used in a prototype, other suitable metals include palladium, titanium, and tungsten. Other transition metals are likely to work. It is believed that some ceramics and cermets would work as well.

The use of a carrier gas with varying percentages of hydrogen allows control over the fuel load and transport in heat generation reactions in the selected reaction lattice. By reducing the percentage of the reactant gas, it is possible to prevent runaway scenarios and promote continuous operations that supplies industrially useful heat while minimizing lattice degradation through transmutation of the lattice material through neutron accumulation. Passive emergency control is achieved by rapid replacement of the reactant gases with non-reactive or carrier gas. Ordinary control is achieved by controlling the temperature, phonon content, pressure and/or flow rate of the gases in the core along with the concentration of reactant in the gas.

In one aspect of the invention, a gas delivery and recirculation system is provided for a reactor having a reactor vessel having a gas intake port and a gas exhaust port, and a lattice into which a reactant gas can be introduced. The delivery and recirculation system comprises a gas router having ports designated as a carrier gas port, a reactant gas port, a reactor input port, and a reactor return port with internal interconnections as follows: the carrier gas port is in fluid communication with the reactor input port through a normally open (ON) valve, the reactant gas port is in fluid communication with the reactor input port through a normally closed (OFF) valve, and the reactor return port is in fluid communication with the reactor input port through a normally closed (OFF) valve. The delivery and recirculation system further comprises one or more gas conduits between the router's reactor input port and the reactor vessel's gas intake port, and one or more gas conduits between the reactor vessel's gas exhaust port and the router's reactor return port.

In another aspect of the invention, a method of operating a reactor that relies on a reactant gas interacting with a reaction lattice inside the reactor comprises: flowing a carrier gas through the reactor to reduce oxides in the lattice; thereafter, introducing a mixture of reactant gas and carrier gas into the reactor so that the lattice absorbs the reactant gas and the reactant gas further reduces oxides; stimulating the lattice to generate phonons in the lattice to provide energy for reactants in the reactant gas that have been absorbed into the lattice to undergo nuclear reactions.

The method can further comprise controlling the nuclear reactions by one or more of adjusting the degree of stimulation of the lattice material, adjusting the pressure and/or flow of the gas mixture introduced into the reactor, adjusting the temperature of the gas mixture introduced into the reactor, adjusting the relative proportions of reactant gas and carrier gas in the gas mixture introduced into the reactor.

In another aspect of the invention, a reactor core comprises: an outer metal tubular shell; a dielectric layer disposed inboard of an inner surface of the outer metal shell; and a layer of lattice material disposed inboard of an inner surface of the dielectric layer. The shell is preferably, but not necessarily a right circular cylindrical shell. In some implementations, the dielectric layer is integrally formed on the inner surface of the outer metal shell and the layer of lattice material is integrally formed on the inner surface of the dielectric layer. In some implementations, the outer metal shell comprises an outer stainless steel component and an inner copper component.

In another aspect of the invention, a reactor core comprises: a metal tube; a dielectric layer disposed on an outer surface of the metal tube; and a layer of lattice material disposed on an outer surface of the dielectric layer.

In another aspect of the invention, a method of fabricating a reactor core comprises: providing a substrate comprising a sacrificial mandrel disposed between two metal tubes; forming a layer of lattice material on the substrate and extending beyond the ends of the mandrel; forming a dielectric layer overlying the layer of lattice material and extending beyond the ends of the mandrel; forming a metal layer overlying the dielectric layer and extending beyond the ends of the mandrel; and removing the mandrel so as to leave a hollow cylindrical structure formed over the ends of the metal tubes with the lattice material disposed on the inner exposed surface of the cylindrical structure.

A further understanding of the nature and advantages of the present invention may be realized by reference to the remaining portions of the specification and the drawings, which are intended to be exemplary and not limiting.

### BRIEF DESCRIPTION OF THE DRAWINGS

FIG. 1 is a schematic showing the gas flow control for a reactor configuration having two recirculation paths according to an embodiment of the present invention, without the details of the reactor and control system;
FIG. 2 shows a preferred embodiment of a gas router that can be used in the reactor of FIG. 1;
FIG. 3 is a schematic showing the gas flow control for a reactor configuration according to an embodiment of the present invention having only a first of the two recirculation paths shown in FIG. 1;
FIG. 4 is a schematic showing the gas flow control for a reactor configuration according to an embodiment of the present invention having only a second of the two recirculation paths shown in FIG. 1;
FIG. 5 is a schematic showing additional details of the gas supply and router portions of the system shown in FIG. 1;
FIG. 6 is a is a schematic showing additional details of the reactor of the system shown in FIG. 1;
FIG. 7A is a perspective view of a reactor core (including protruding end tubes) where the lattice is disposed on the inner-facing surface of a tube and the reactant gas flows through the tube;
FIG. 7B is a side view of the reactor core of FIG. 7A, showing the regions adjacent the ends;
FIG. 7C is an end view of the reactor core of FIG. 7A;
FIG. 7D is a perspective view of one of the end tubes of the reactor core of FIG. 7A;
FIG. 7E is a cross-sectional view of the reactor core taken through line 7E-7E of FIG. 7B;
FIG. 7F is an enlarged partial view of FIG. 7E;
FIG. 8A is a perspective view of a sacrificial aluminum mandrel that is used during the manufacture of the reactor core of FIG. 7A;
FIG. 8B is a cross-sectional view of the reactor core corresponding to the cross-sectional view of FIG. 7E, but with the mandrel in place;
FIG. 8C is an enlarged partial view of FIG. 8B; and
FIG. 9 is a cross-sectional view of a reactor core where the lattice is disposed on the outer-facing surface of a tube and the reactant gas flows outside the tube.

### DESCRIPTION OF SPECIFIC EMBODIMENTS

### Introduction

Embodiments of the present invention control dissolving the reactive gas (e.g., hydrogen; often referred to as fuel gas or simply fuel) in a transition metal lattice structure for the purpose of producing industrially useful heat. The lattice structure can be a self-supporting shape (e.g., wire, slab, tube) of solid or sintered material, or can be material deposited on a support structure. Further, the lattice structure can include powdered or sintered material that relies on a supporting or containing structure in a sitting bed, fluidized bed, or packed bed format.

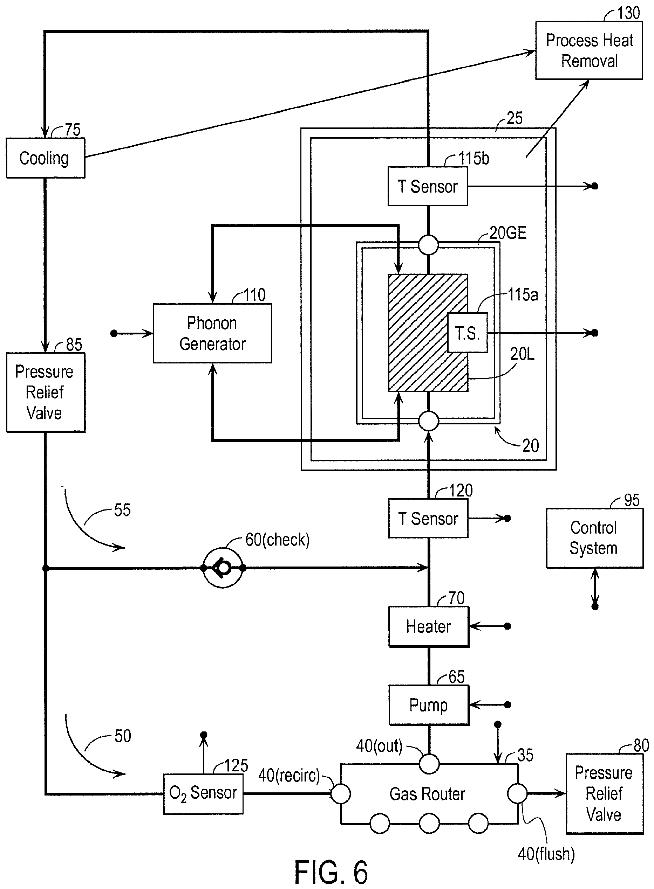

Godes_2007 describes a method of producing useful heat using powdered material, and embodiments of the present invention further refine the use of flowing reactant gas (e.g., hydrogen: the "Reactant Source 25" as labeled in FIG. 6 of Godes_2007) through a bed of powdered or sintered reaction lattice material. Embodiments of the present invention provide a selected inert carrier gas such as helium or argon to deliver the reactive gas at appropriate temperature and pressure conditions and flowing the gases over or through the material in combination with appropriate phononic stimulation.

### System Topology

### System Overview

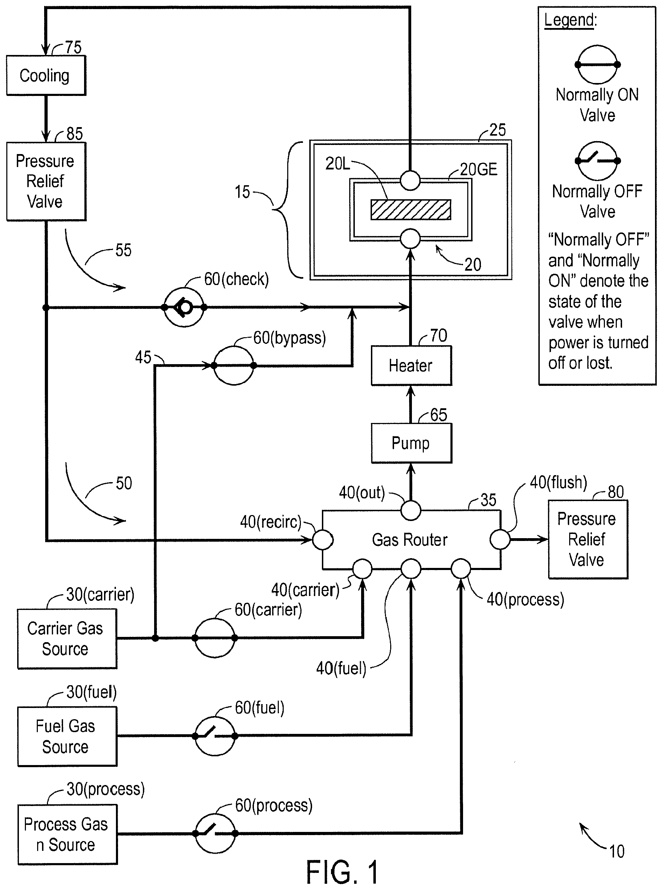

FIG. 1 is a schematic showing the gas flow control for a reactor system 10 built around a reactor 15 according to an embodiment of the present invention. This figure does not show the details of the reactor and control system. Reactor 15 is shown at a high level, and includes a core 20 surrounded by a reactor vessel 25. Core 20 includes a lattice structure 20L shown schematically as a hatched block and a gas enclosure 20GE with input and output ports (or the ability to (dynamically) control the content of the gases in the core through at least one port). Reactor vessel 25 causes a working (power transfer) fluid to contact at least part of the core so as to draw reaction heat from the core.

For example, the reactor vessel could be a boiler, and the working fluid could be water that is heated as is done in conventional boilers. Alternatively, the core could placed in a boiler's steam line or dome to provide superheating. The working fluid could also be electrons in the form of a direct thermal conversion device. The core gases may also function as a working fluid to transport heat from the enclosed lattice material delivered to a heat exchanger or converter and returned to the reaction area.

The reactor system is operated by flowing one or more gases through reactor 15. The gases are provided by gas sources 30, including a carrier gas source 30(carrier), a fuel gas source 30(fuel), and optionally one or more process gas sources 30(process). The flow of the gases to and from the reactor is controlled by a gas router 35 having a set of ports 40, including a carrier gas input port 40(carrier), a fuel gas input port 40(fuel), a recirculation input port 40(recirc), a router output port 40(out), a flush port 40(flush), and optionally one or more process gas input ports 40(process). The fuel gas can also be referred to as reactant gas.

The system includes paths from the respective gas sources 30 to respective router ports 40 of router 35, which allows selective direction of gas to core 20. In addition, a bypass path 45 allows carrier gas from carrier gas source 30(carrier) to flow directly to reactor 15 without passing through router 35. The gas leaving the reactor is subject to recirculation. A first recirculation path 50 carries gas back to recirculation input port 40(recirc) on router 35. A second recirculation path 55 carries gas back to the input port on the gas enclosure of core 20. This second recirculation path is suitable for use in a system that is designed to use convection for recirculation, and for the most part, first recirculation path 50 would not be used in a system that that was designed to use convection for recirculation through second recirculation path 55.

Gas sources 30 and gas router 35 operate in concert with a set of control valves 60, which are shown with a failsafe or fallback configuration as will be discussed below. The control valves include a carrier gas control valve 60(carrier), a fuel gas control valve 60(fuel), optionally one or more process gas control valves 60(process), These valves are located in the respective paths between gas sources 30(carrier), 30(fuel), and 30(process) and the corresponding gas input ports 40(carrier), 40(fuel), and 40(process) on the router. In addition, a bypass control valve 60(bypass) is located in bypass path 45. A check valve 60(check) is located in second recirculation path 55 to prevent reverse flow back into the core in case bypass control valve 60(bypass) is opened.

A pump 65 controls the flow of gas leaving router 35 for reactor 15. In a system that uses convection for circulation, it may be possible to dispense with pump 65. A heater 70 is interposed to heat the gas entering the reactor to a determined optimal temperature. Heater 70 may be used during normal reactor operations, but is also used during initial removal of oxides from the lattice, as will be described below. Alternatively, heater 70 may be integral to the core. A cooler 75 controls the temperature of the gas leaving the reactor to ensure that it is not so hot as to damage any downstream equipment. Furthermore, it is preferable to cool the gas below the above-mentioned optimal temperature to provide a degree of freedom that allows heater 70 to bring the gas entering the reactor to the optimal temperature. Also, as discussed below, the cooler can be used in connection with setting up a convection cell for convective recirculation. To this end, the cooler is located below the top of the reactor.

A pressure relief valve 80 is located at the router 35's flush port 40(flush) and for a system using convection for circulation and using second recirculation path 55, a pressure relief valve 85 valve is located after cooler 75 to effectively define the maximum pressure in the system. As will be discussed below, the router is used to effect various modes of the system, and cooperates with control valves 60 and pressure relief valves 80 and/or 85.

### Gas Router

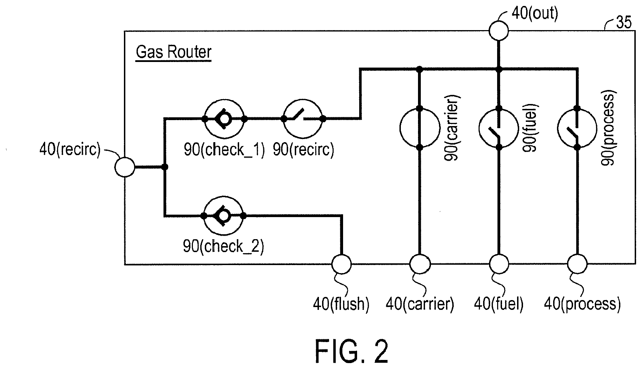

FIG. 2 shows a preferred embodiment of a gas router that can be used in the reactor of FIG. 1, and as such it is referred to as router 35. The gas router has ports corresponding to those shown in FIG. 1, namely carrier gas input port 40(carrier), fuel gas input port 40(fuel), recirculation input port 40(recirc), router output port 40(out), flush port 40(flush), and one or more optional process gas ports 40(process). The router has a number of internal conduits and internal valves 90, as will now be described.

The router's internal valves include a carrier gas valve 90(carrier) in a conduit between carrier gas input port 40(carrier) and output port 40(out), a fuel gas valve 90(fuel) in a conduit between fuel gas input port 40(fuel) and output port 40(out), and one or more optional process gas valve(s) 90(process) in one or more conduits between process gas input port(s) 40(process) and output port 40(out). Control valves 90 further include a check valve 90(check_1) and a recirculation valve 90(recirc) located in a conduit between recirculation input port 40(recirc) and router output port 40(out). Check valve 90(check_1) is oriented to allow flow from recirculation input port 40(recirc) and router output port 40(out), but not in the reverse direction. A check valve 90(check_2) is located in a conduit between recirculation input port 40(recirc) and flush port 40(flush). Check valve 90(check_2) is oriented to allow flow from recirculation input port 40(recirc) and router flush port 40(flush), but not in the reverse direction.

FIGS. 1 and 2 use the following drawing convention for open and closed valves. Confusion can arise since the meaning of open and closed circuits/switches in the electrical circuit context is opposite the meaning of open and closed valves in the fluid valve context. In the circuit context, a short circuit or closed switch passes current and an open circuit or switch blocks current. In the valve context, a closed valve blocks fluid and an open valve passes fluid. In the figure, a closed valve is denoted with the symbol of an open circuit or switch, namely a blocking state. Similarly, an open valve is denoted with the symbol of a short circuit or closed switch, namely a transmitting state. Thus, the symbolism of blocking or passing fluid is consistent with the symbology of blocking or passing electrical current, even though the words "open" and "closed" connote opposite meanings. Valves will be referred to as ON for allowing gas flow and OFF for blocking gas flow.

The use of the term "normally open (ON) valve" or "normally closed (OFF) valve" refers to the valve having a mechanism that causes the valve to assume the ON (or OFF) state in the event of a loss of power or other abnormal condition. The terms do not connote that the valves are always in those positions; indeed a normally ON (or normally OFF) valve will typically be commanded to be in its OFF (or ON) state or an intermediate state under some sets of operating conditions, and will typically be commanded to be in its ON (or OFF) state or an intermediate state under other sets of operating conditions. That is, during normal system operation, the various valves will sometimes be open (ON) and sometimes be closed (OFF).

FIG. 1 shows default states of control valves 60, that is, the respective states that the valves will assume when power to the system is lost (whether by design or accident) or when an abnormal condition occurs. The valves shown in FIG. 1 are configured to provide a failsafe default state. To this end, fuel gas control valve 60(fuel) and process gas control valve 60(process) are configured to be "normally closed" (i.e., "normally OFF") while carrier gas control valve 60(carrier) and bypass control valve 60(byp) are configured to be "normally open" (i.e., "normally ON").

Similarly, the router's valves shown in FIG. 2 are configured to provide a failsafe default state. To this end, fuel gas control valve 90(fuel), process gas control valve(s) 90(process), and control valve 90(recirc) are configured to be "normally closed" (i.e., "normally OFF") while carrier gas control valve 90(carrier) is configured to be "normally open" (i.e., "normally ON"). The gas router thus features a default of non-recirculation of the gas through core 20; rather carrier gas flows from carrier gas input port 40(carrier) through the core, and out through router flush port 40(flush). As mentioned above, pressure relief valve 80 ensures that the system maintains a safe operating pressure while check valve 90(check_2) prevents contamination of the reaction lattice.

As will be described in detail below, operation of the reactor begins with a process of flowing carrier gas into reactor 15 to remove free oxygen from the lattice, following which hydrogen or a process gas (e.g., ammonia) is added to the mix to remove oxides from the lattice. After this, fuel gas is mixed in with the carrier gas to initiate the reaction, and gases exiting the reactor are recirculated into the reactor. During the time that the reactor is operating to generate energy, control system 95 will, from time to time, determine that the mixture of fuel and carrier gases needs to be enriched (increase fuel content) or diluted (decrease fuel content). To support these operations, router valves 90(...) within router 35 will be controlled to effect certain connections among the router's ports port 40(...).

The following table sets forth the gas router states.

| | | |
|---|---|---|
| 1. | Deoxygenating reactor contents | One or more of carrier gas input port 40(carrier), fuel gas input port 40(fuel), and one or more of process gas port(s) 40(process) are connected to router output port 40(out) by selectively opening (turning ON) one or more of: carrier gas valve 90(carrier); fuel gas valve 90(fuel); and one or more of process gas valve(s) 90(process). |
| | | Recirculation input port 40(recirc) is connected to flush port 40(flush) while recirculation input port 40(recirc) is isolated from router output port 40(out) by closing (turning OFF) recirculation valve 90(recirc). |
| 2. | Steady state operation | Recirculation input port 40(recirc) is connected to router output port 40(out) by opening (turning ON) recirculation valve 90(recirc). |
| | | Carrier gas input port 40(carrier), fuel gas input port 40(fuel), and process gas port(s) 40(process) are disconnected from router output port 40(out) by closing (turning OFF) carrier gas valve 90(carrier), fuel gas valve 90(fuel), and process gas valve(s) 90(process). |
| 3. | Increase fuel content | Recirculation input port 40(recirc) is connected to router output port 40(out) by opening (turning ON) recirculation valve 90(recirc). |
| | | Fuel gas input port 40(fuel) is connected to router output port 40(out) by opening (turning ON) fuel gas valve 90(fuel). |
| | | Carrier gas input port 40(carrier) and/or process gas port(s) 40(process) will likely be disconnected from router output port 40(out) by closing (turning OFF) carrier gas valve 90(carrier) and process gas valve(s) 90(process). |
| 4. | Decrease fuel content | Recirculation input port 40(recirc) is connected to router output port 40(out) by opening (turning ON) recirculation valve 90(recirc). |
| | | Carrier gas input port 40(carrier) is connected to router output port 40(out) by opening (turning ON) carrier gas valve 90(carrier). |
| | | Fuel gas input port 40(fuel) and/or process gas port(s) 40(process) will likely be disconnected from router output port 40(out) by closing (turning OFF) fuel gas valve 90(fuel) and process gas valve(s) 90(process). |

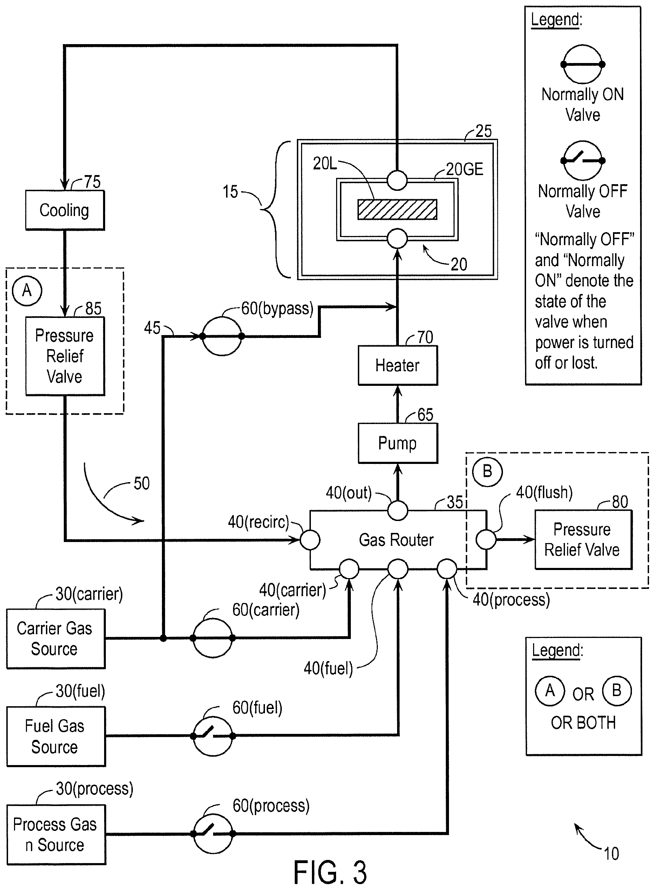

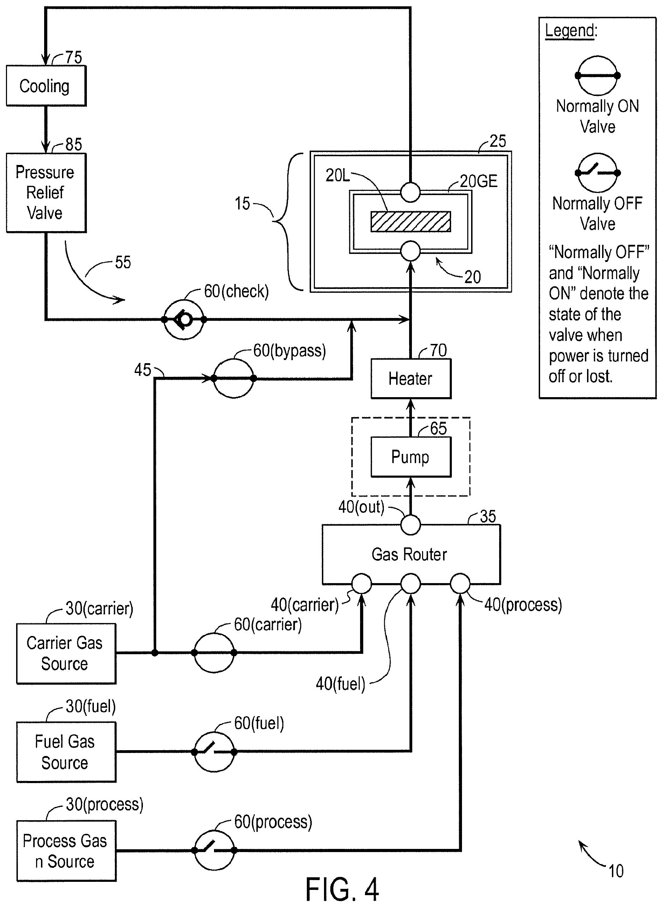

As mentioned above, FIG. 1 shows pressure relief valves 80 and 85, and pressure relief valve 85 is intended for use in a system that uses convection for recirculation along second recirculation path 55. While it can be convenient to provide a system that can be selectively configured to use one or the other of recirculation paths 50 and 55, it is also contemplated to provide systems with one or the other, but not both. FIGS. 3 and 4 show such systems.

FIG. 3 is a schematic showing the gas flow control for a reactor configuration having only recirculation path 50 (recirculation path 55, shown in FIG. 1, is not present). In this configuration, it is possible to use only one pressure relief valve, although there is no fundamental reason that both shouldn't be provided. This is denoted in the drawing by a dashed box around pressure relief valves 80 and 85, with a legend signifying that one or the other (or both) could be used. If pressure relief valve 80 is eliminated, there would be no need for router flush port 40(flush) or the internal router path containing check valve 90(check_2).

FIG. 4 is a schematic showing the gas flow control for a reactor configuration that is designed for operation in a convective recirculation mode. This configuration only includes recirculation path 55 (recirculation path 50, shown in FIG. 1, is not present), and only includes pressure relief valve and 85 (pressure relief valve 80, shown in FIG. 1, is not present). Given the absence of recirculation path 50, router 35 does not need either recirculation input port 40(recirc) or flush port 40(flush). Further, it does it need the internal router paths containing check valve 90(check_1), recirculation valve 90(recirc), and check valve 90(check_2).

Pump 65 is drawn surrounded by a dashed line, signifying that it is generally not required during normal operation. There may be some situations where it is preferable to provide the pump rather than relying on the pressure provided by the gas sources and their associated in-line elements. Such situations might include, for example, rapidly purging the system with carrier gas, or removing oxygen from the core (as will be described in detail below).

As mentioned above, the configuration of FIG. 4 is designed for operation in a convective recirculation mode. This is accomplished by providing a path from the top to the bottom and extracting heat from the gas in that loop. Cooling the gas causes an increase in density of the gas, which causes the gas to fall due to gravity. At the same time the gas in gas enclosure 20GE is heating which reduces the density and causes it to rise in the system, setting up a convection cell to circulate the gas in the system. For this configuration, the reaction chamber should be vertical. Forcing additional gas into the system will cause pressure relief valve 85 to release gas that has exited the reactor, and allow a change of concentration of fuel to carrier gas or process gas in the system.

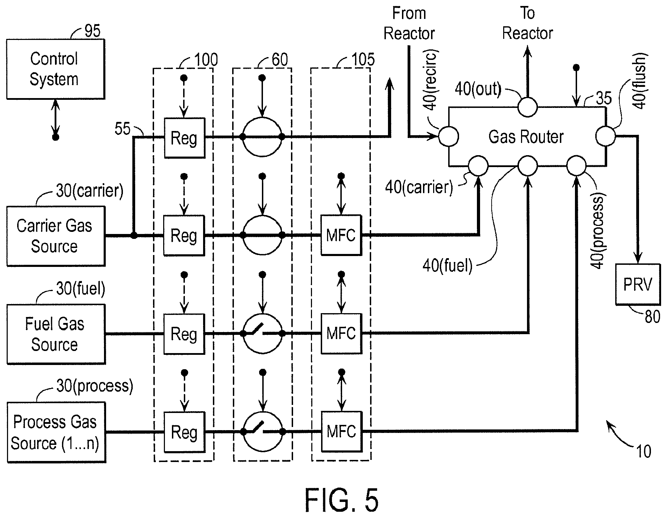

FIG. 5 is a schematic showing additional details of the gas supply and router portions of the system shown in FIG. 1. In addition to elements shown in FIG. 1, the figure shows elements that are not shown in FIG. 1, and shows a control system 95. Control system 95 is shown with an arrow, one end of which is connected to the control system and the other end of which has a black dot signifying connection to other elements. The figure also shows connections of the various elements to control system 95 (the connections are shown as arrows having one end connected to the various elements and the other end having a black dot signifying a connection to the control system). The conduits to router 35 from carrier gas source 30(carrier), fuel gas source 30(fuel), and optional one or more process gas sources 30(process) are provided with respective gas pressure regulators 100. In addition, a separate regulator is provided in the path from carrier gas source 30(carrier) to bypass path 45.

The conduits to router 35 from carrier gas source 30(carrier), fuel gas source 30(fuel), and optional one or more process gas sources 30(process) are provided with respective mass flow controllers 105 for monitoring and controlling the flow of gas from the respective gas sources. There is typically no need to provide a mass flow controller in bypass path 45. Any of valves 90 can be controlled to its closed or OFF position to shut off its associated gas supply, for example to allow maintenance operations to be performed on its associated mass flow controller. It may be desirable to provide a mass flow controller between pump 65 and heater 70.

### Reactor

FIG. 6 is a schematic showing additional details of reactor 15 and its connected elements for the system shown in FIG. 1. In particular, a phonon generator 110 provides phonons to stimulate lattice structure 20L for starting the reaction, and possibly for providing additional phonons to the lattice to control the reaction below temperatures where the phononic content of the lattice is sufficient to run the reaction without requiring additional phonons from phonon generator 110.

The phonon generator can provide phonon stimulation of the lattice using one or more of the following forms of stimulation: thermal (e.g., using a resistive heater); ultrasonic (e.g., using a sonic source of continuous or intermittent phonons); electromagnetic (e.g., ranging from low to high frequencies); or electrical stimulation (e.g., short pulses, referred to as quantum pulses in Godes_2007). Feedback is determined by increase in the heat of the gas caused by the electron and neutron capture mechanisms described in Godes_2007.

Reactor 15 is shown in additional detail. Gas enclosure 20GE can be made of quartz, alumina, or other suitable dielectric material if the system requires passing a current through lattice structure 20L. Additionally, the gas enclosure can be formed with an electrically conductive outer layer to form a transmission line between the lattice and this outer conductor, for transmission of current spikes through the reactive lattice.

Temperature sensors 115a and 115b provide temperature measurements of core 20 and of the gas leaving the core. While temperature sensor 115a is shown as measuring the temperature of lattice structure 20L, it could alternatively or in addition measure the temperature of the gas surrounding the lattice or the outer surface temperature of gas enclosure 20GE. An additional temperature sensor 120 is located upstream of the reactor to maintain the temperature of the gas leaving heater 70 at an optimal temperature. An oxygen sensor 125 is located in recirculation path 50, primarily for determining when sufficient oxide removal has occurred during the startup phase discussed below.

FIG. 6 also shows a process heat removal component 130 thermally coupled to reactor vessel 25 and cooler 75 to prevent overheating, but more particularly to provide heat for practical commercial uses. The process heat removal component can include any commercially available heat exchanger, direct thermal conversion unit, or condensing unit.

### Specific Reactor Implementation - Inward-Facing Lattice

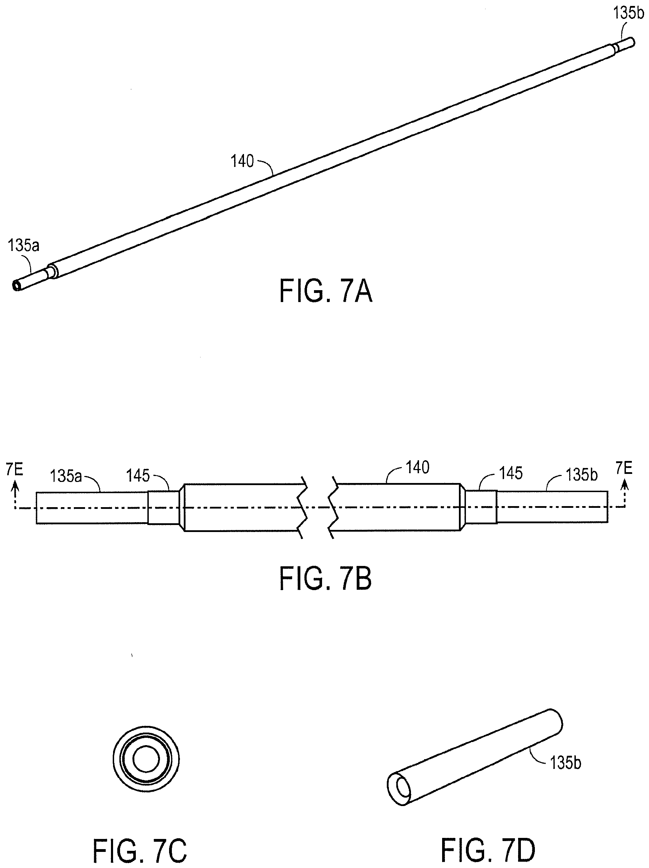

FIG. 7A is a perspective view of one implementation of reactor core 20 that incorporates a transmission line as mentioned above. The core has end tubes 135a and 135b protruding from opposite ends of the core. The end tubes provide the input and output gas conduits, as well as structural support and sealing, and further act as the central electrode of a coaxial transmission line. The core and the end tubes preferably have a cylindrical tubular configuration. The portion of the core that is exposed in this view is the outer surface of gas enclosure 20GE and has a larger outside diameter than that of the end tubes. As will be discussed below, the core is actually formed from the inside out as a series of layers deposited on the outer surface of a cylindrical substrate, with lattice structure 20L being formed as a cylindrical shell on the inner surface of the tubular gas enclosure. While the description is in terms of circular tubes, other cross sections are possible.

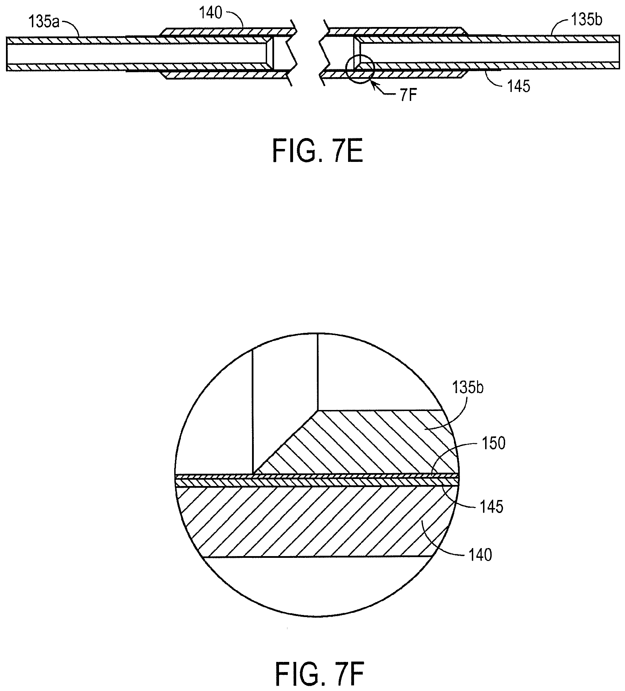

FIG. 7B is a side view of the reactor core of FIG. 7A, showing the regions adjacent the ends of the reactor. The central portion of the core, making up a majority of the length, is shown as broken so that the ends can be presented at higher magnification. FIG. 7C is an end view of the reactor core of FIG. 7A, while FIG. 7D is a perspective view of end tube 135b of the reactor core of FIG. 7A. FIG. 7E is a cross-sectional view of the reactor core taken through line 7E-7E of FIG. 7B, while FIG. 7F is an enlarged partial view of FIG. 7E.

From the outside going in, the core comprises three coaxial layers: an outer metal layer 140, a dielectric layer 145, portions of which are exposed in FIG. 7A, and an inner layer 150 of metallic lattice material (in this example, nickel), which corresponds to lattice structure 20L. The end tubes are beveled at their facing ends to provide a frustoconical (tapered) transition between the narrower tube bore and the wider core bore (which is defined by the outer diameter of the end tubes). Inner layer 150 of lattice material and outer metal layer 140, which are spaced by dielectric layer 145, define the electrodes of a coaxial transmission line.

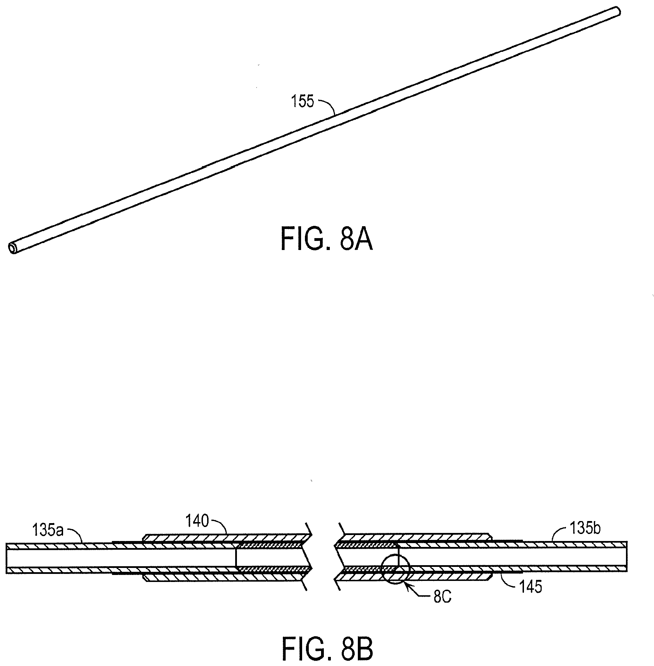

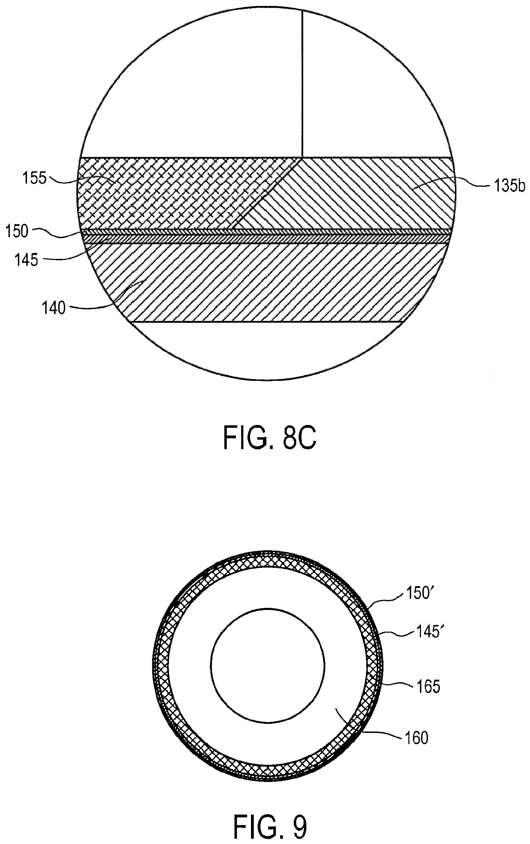

FIG. 8A is a perspective view of a sacrificial mandrel 155 that is used during the manufacture of the reactor core of FIG. 7A. FIG. 8B is a cross-sectional view of the reactor core corresponding to the cross-sectional view of FIG. 7E, but with the mandrel in place, while FIG. 8C is an enlarged partial view of FIG. 8B. In a current implementation, mandrel 155 is aluminum, but could be made of any other desired selectively etchable material. As can be seen, the mandrel has frustoconical ends.

Initially, during the manufacture, a composite substrate structure is provided that comprises the pair of spaced tubes 135 separated by mandrel 155. The ends of tubes 135 are beveled as discussed above, and the mandrel's ends are beveled so as to nest in the beveled ends of the tubes. Put another way, the mandrel's ends are convex and the tube ends are concave. The outer diameter of end tubes 135 is matched to the outer diameter of mandrel 155. The bore diameter of these elements are also matched so that the end tubes and the mandrel can be aligned simply by sliding them together on a rod having an outer diameter sized for a sliding fit within the end tubes and mandrel.

Next, a layer of lattice material (e.g., nickel) is deposited on the substrate by any desired process such as plating or plasma spraying. The end tubes may have been plated with copper to reduce the impedance between the outer surface of the end tube and the lattice material, or the copper can be deposited after the substrate has been assembled. The outer surface of the mandrel can be roughened in order to increase the surface area of the lattice material.

Then, a layer of dielectric material (e.g., ceramic) is deposited by any desired process such as plasma spraying. This may have a layer of glaze applied or be laser sintered. This will define dielectric layer 145 discussed above. Then, a layer of metal (e.g., copper covered by stainless steel) is deposited by any desired process such as plasma spraying to form outer metal layer 140 discussed above. This outer metal layer is significantly thicker than the other layers since it is providing the structural outer wall of gas enclosure 20GE. The outer metal layer may be a multi-layer structure, for example a layer of copper first to reduce the impedance followed by a thicker stainless steel layer. A portion of the dielectric layer extends beyond the outer metal layer, and the copper layer preferably extends out from under the stainless steel, but not to the end of the dielectric layer.

The sacrificial mandrel is then removed by an etching process consistent with selective etching of the mandrel material. The above description of the process steps for forming the layers of the core contemplates that there can be additional intervening steps, such as polishing or other treatments to enhance the adhesion of the layers to prevent delamination during operation. While specific dimensions are not critical to practice the invention, some representative dimensions will be given to provide some overall context. For example, the core length (including end tubes) can be on the order of 24-30 inches, and the outer diameter of the end tubes and mandrel can be on the order of 1/4-1/2 inch. The combined thicknesses of the layers forming the core can be on the order 1/16-1/4 inch.

Thus, for the example where the core's outer diameter is 3/8 inch and the end tube diameter is 1/4 inch, the layer thicknesses and materials can be as set forth in the following table.

| Layer | Material | Thickness (inches) |
|---|---|---|
| copper layer on stainless tube | copper | ∼ 0.002 - 0.005 |
| lattice | nickel | ∼ 0.002 - 0.004 |
| dielectric layer | yttrium stabilized zirconia | ∼ 0.006 - 0.011 |
| outer metal layer | copper / stainless steel | ∼ 0.005 / ∼ 0.038 - 0.048 |

These dimensions are merely representative. As mentioned above, the copper component of the outer metal layer that overlies the dielectric layer and underlies the stainless steel preferably extends beyond the stainless steel to allow good electrical contact to be made with the copper underlying the stainless steel and making up the outer electrode.

Electrical connections are made by clamping the output connectors from the pulse generator to the exposed portion of one of the end tubes and to the outer metal layer (copper overlying a portion of the exposed dielectric layer). The transmission line is terminated at the other end by clamping termination elements to the corresponding metal surfaces at that end. Currently, a 3-ohm core is being used; the Q pulse generator can be operated over a wide range of voltages and frequencies. For example, frequencies from 1 Hz to 100 kHz and voltages from 1 volt to 600 volts are contemplated.

### Specific Reactor Implementation - Outward-Facing Lattice

FIG. 9 is a cross-sectional view of a reactor core where the lattice is disposed on the outer-facing surface of a stainless steel tube 160 and the reactant gas flows outside the tube. Here, the layers are formed in in reverse order without using a sacrificial mandrel, and the lattice is formed on the outside of the tubing. First, a copper layer 165 is deposited over the full length of the tube. Then a dielectric layer, denoted 145', is deposited leaving end portions of the copper layer exposed. Then a nickel layer, denoted 150', is deposited leaving some of the dielectric layer exposed.

This entire assembly would then be placed inside of a container with the fuel mixture flowing over he outside. The purpose of these types of assemblies is to provide clean transmission / propagation of the Q pulse signal through the reactive lattice / core. This minimizes transitions in the system that would reflect part of the Q pulse energy, and reduce the effectiveness of the Q pulse.

In yet another embodiment, a system could be constructed with a dielectric container having a conductive layer on the outside and the lattice material as a powder on the inside to form a transmission line for the Q pulse. This could be operated as a sitting, fluidized, or packed bed type device, or even switch between the three states during operation. The outer cladding could be skipped if the Q pulse is supplied as a deformation initiated by a piezo type material, a laser, or even using a thermal heat source.

### Operation and Control

### Process Overview

The system components discussed above provide a method of control that uses temperature, pressure, and the flow of an adjustable gas mixture. For the functional modes of operation the percentage of hydrogen in the carrier gas, and the temperature and pressure of the hydrogen and the carrier gas are changed to start the system up, to control it in the run mode, and to turn the system off normally or promptly. Some operational modes are characterized by high temperatures and/or pressures. The system is instrumented to be autonomously self-regulating.

Thus, as discussed above, normal operation of the reactor is typically preceded by a process of flowing carrier gas into reactor 15 to remove free oxygen from the lattice, and then a process of removing oxides from the lattice. During this process, control valves 60(...) and router valves 90(...) within router 35 are controlled to flow only carrier gas into the core's gas enclosure 20GE, and to direct the gas leaving the gas enclosure 20GE to the router's flush port 40(flush) by keeping router valve 90(recirc) OFF. Thereafter, control valves 60(fuel) and 90(fuel) are opened (turned ON) to allow fuel (hydrogen) to mix with the carrier gas entering the reactor, and router valve 90(recirc) is opened to allow the gas mixture to be recirculated through the core's to gas enclosure 20GE.

Temperature sensors 115a, 115b, and 120 are used to help determine whether the carrier/fuel should be enriched (fuel content increased) or diluted (fuel content decreased), and control valves 60(carrier, fuel) and 90(carrier, fuel) can be controlled to establish desired operating conditions.

### Oxygen Removal

The above summary is somewhat simplified, although correct in substance. The system is initialized by flowing heated carrier gas through gas enclosure 20GE with lattice 20L at a high temperature to drive oxides out of the system. For example, for a nickel lattice, a temperature on the order of 625C would be sufficient to initiate breakdown of the oxides using carrier gas alone. Removal of the oxides can be accomplished at a lower temperature in a two-step process. The first step is to flush the core with carrier gas until the free oxygen gas is removed; the second step is to run the deoxidation operation with some hydrogen present in the gas (adding either the fuel gas or a hydrogen-containing process gas such as ammonia) so as to chemically reduce the oxides and thus purge them from the system.

For the implementation of FIG. 3, this is carried out with router valve 90(recirc) OFF. This oxygen removal phase is carried out at a pressure that exceeds the set point of pressure relief valve 80 or 85 (depending on which one is present). Put another way, the process is started with the inert carrier gas to prevent explosive ratios of hydrogen and oxygen. Only then is hydrogen or process gas used to complete the removal of oxygen from the system. The introduction of fuel gas also leads to startup of the system.

The pressure relief points can be dynamically controllable, and it might be desirable to set the relief point lower for this purging stage where the system may be operating at lower pressure than during normal energy generation conditions. For example, this could be the case if the system were operating at lower temperatures using the two-step oxygen removal process. It may be desirable to keep two manually-settable pressure relief valves set at different levels, and put a controllable shut-off valve in front of the one that is set for the lower pressure, especially if the cost of two manually-settable pressure relief valves and one controllable regular valve was lower than the cost of a single dynamically controllable pressure relief valve.

Check valve 60(check) could be replaced by a control valve, but it may be desirable to put a control valve next to check valve 60(check), and turn that valve ON to operate in convection mode and OFF to use the system in pump mode.

### System Startup and Normal Operation

The system is started by heating the gas using heater 70 and/or heating lattice 20L directly using phonon generator 110 to the point where the lattice material absorbs hydrogen, and may begin to generate neutrons and heat. Next the electrical, magnetic, pressure, or a combination of phonon generation signals may be supplied to the system, as described in Godes_2007, at the amplitude and frequency ranges that promote electron capture. Although heater 70 is shown outside the reactor and being used to heat the incoming gas, heater 70 can be moved inside the reactor to heat the core directly, or an additional heater can be provided inside the reactor. Depending on the implementation of phonon generator 110, it can provide the direct heating functionality.

### System Control

During regular operations the system operates in the steady state mode where power in is minimized and power out is maximized using controlled feedback from temperature sensors 115a, 115b, and 120 to control mass flow controllers 105, pump 90, heater 70, and phonon generator 110. It may be desirable to have additional temperature sensors.

Gas pressure regulators 100 and pressure relief valve 85 can be under system control to dynamically adjust the operating point in cases where core 20 is operating under extreme conditions. An example is where the core is located in a boiler for the generation of electricity where it may be operating at substantially higher pressures. This allows the system to maintain a minimal thermal work function by allowing a lower temperature difference between the reaction lattice and the heat transfer medium or end use. The term "work function" refers to the required temperature difference between the inside of core 20 and reactor vessel 25 to move a unit of energy out of the system.

The reactor operating conditions are monitored and controlled to promote the production of neutrons. Hydrogen ions migrating in the lattice capture these neutrons preferentially. The optimal conditions are maintained to the system to generate an adequate supply of neutrons for capture and energy generation by release of binding energy. As heat is detected by temperature sensors 115a and 115b, the system is governed by its instruments to "zero in" on conditions that generate the desired output.

This is accomplished by one or more of:
- adjusting the operating parameters of phonon generator 110 to control the signals stimulating the lattice material in which the hydrogen is dissolved;
- adjusting the pressure and flow of the gases in core 20, for example by controlling one or more of valves 60, pump 65, pressure relief valve 80 and/or 85;
- controlling a mass flow controller between pump 65 and heater 70;
- adjusting the temperature of the gas entering the core, as sensed by temperature sensor 120, by controlling heater 70; and
- adjusting the ratio of hydrogen (source 30(fuel)) to carrier gas (source 30(carrier)) by controlling the respective mass flow controllers 105.

The hydrogen's mass flow controller and pump 65 are also controlled to ensure adequate flow of hydrogen through the system to minimize the transmutation of lattice material. Thus, the above sensing and control in the context of using the carrier gas as well as controlling the ratio of hydrogen to carrier gas provide the control required to make a practical and industrially useful heat source. The conditions of the core are autonomously regulated by control system 95 by the heat production detected and pressure requirements to maintain the integrity of a low work function reactor.

Some operational aspects can be summarized as follows:
- Controlling the percentage of hydrogen gas in an inert carrier gas keeps the neutron forming reactions within desired limits and operational ranges (source 30(fuel), source 30(carrier), mass flow controllers 105).
- Controlling the flow of gas that feeds a pressurized core (gas router 35, pump 65).
- Actively controlling the pressure in the system allows a more economically viable core 20 to reside in a high-pressure reactor vessel 25 such as a boiler.
- This allows for a core with a much lower work function (the required temperature difference between the inside of core 20 and reactor vessel 25 to move a unit of energy out of the system), and higher quality of heat production by allowing a lower temperature difference between the reaction lattice and the heat transfer medium or end use.
- The mechanisms by which the gas or gases are re-circulated (recirculation path 50 and pump 65, or recirculation path 55) into the gas enclosure 20GE containing reaction lattice 20L minimize maintenance and replacement of the gases and the reaction lattice.
- Controlled gas flow in and out of the core provides a sufficient flow of hydrogen to reduce neutron capture by the host lattice, thereby minimizing degradation of the lattice material via transmutation.

### References

The following documents referred to herein are hereby incorporated by reference:

| | |
|---|---|
| Godes_2007 | U.S. Patent Publication No. 2007/0206715 for "Energy Generation Apparatus and Method" published September 6, 2007 (Robert E. Godes; U.S. Patent Application No. 11/617,632 filed December 28, 2006) |
| Rossi_2011 | U.S. Patent Publication No. 2011/0005506 for "Method and Apparatus for Carrying out Nickel and Hydrogen Exothermal Reaction" published January 13, 2011 (Andrea Rossi; U.S. Patent Application No. 12/736,193 filed August 4, 2009) |
| Piantelli_2011 | U.S. Patent Publication No. 2011/0249783 for "Method for Producing Energy and Apparatus Therefor" published October 13, 2011 (Francesco Piantelli; U.S. Patent Application No. 13/126,247 filed November 24, 2009) |
| Zawodny_2011 | U.S. Patent Publication No. 2011/0255645 for "Method for Producing Heavy Electrons" published October 20, 2011 (Joseph M. Zawodny; U.S. Patent Application No. 13/070552 filed March 24, 2011) |

### Conclusion

In conclusion, it can be seen that embodiments of the present invention provide mechanisms and techniques for controlling the reactions by controlling inputs governing the gas / hydrogen temperature, concentration, flow rate, pressure and phonon conditions in the reaction chamber. The reactions can be made to stop at any time by turning off the phonon generator, reducing the concentration of hydrogen in the inert carrier gas to nil and flowing the remaining hydrogen out of the reaction lattice area so that insufficient hydrogen ions are available to sustain the reactions.

The inventive mixed gas reactor with phonon control can generate industrially useful heat continuously from the controlled electron capture reaction (CECR; described as quantum fusion reaction in Godes_2007). The effects in transition metals among the nuclei of the selected lattice material and the hydrogen ions dissolved in the lattice hydride solution. The desired effects occur at a point of hydrogen loading, which varies according to temperature, pressure, and hydrogen content conditions in and around the hydride particles. It may be possible to engineer additional materials to run the reaction.

The inventive control system maximizes the production of heat from the lattice material by providing variable conditions promoting quantum transmutive reactions wherein some of the hydrogen ions absorbed in the lattice material are transmuted to neutrons by electron capture when there is sufficient energy in the location of the ion in the lattice material. Ambient energy and/or phonon generator 110 has as its primary function transferring energy to the lattice in the form of phonons supplied by heat pressure, electronic or magnetic (EM) inputs applied to generate waves of the correct amplitude and frequency to promote electron capture by hydrogen confined in the lattice.

Compared to some existing prior art systems, a system according to embodiments of the present invention can be more controllable, can require less maintenance, and can be capable of operating at significantly higher temperatures, pressures, and for longer periods of time. Embodiments also provide techniques for removing oxides and activating the lattice system without needing a vacuum. That does not mean to say that operation below atmospheric pressure might not be useful under some conditions; however, providing a reduced pressure adds to the expense and complexity, and runs the risk of drawing oxygen into the system from the surrounding air.

While the above is a complete description of specific embodiments of the invention, the above description should not be taken as limiting the scope of the invention as defined by the claims.

Further exemplary embodiments of the present disclosure are set out in the following numbered clauses:
Numbered clause 1. A gas delivery and recirculation system for a reactor having
   a reactor vessel having a gas intake port and a gas exhaust port,
   a lattice into which a reactant gas can be introduced,
   the delivery and recirculation system comprising:
   a gas router having ports designated as a carrier gas port, a reactant gas port, a reactor input port, and a reactor return port with internal interconnections as follows:
      the carrier gas port is in fluid communication with the reactor input port through a normally open (ON) valve,
      the reactant gas port is in fluid communication with the reactor input port through a normally closed (OFF) valve, and
      the reactor return port is in fluid communication with the reactor input port through a normally closed (OFF) valve;
   one or more gas conduits between the router's reactor input port and the reactor vessel's gas intake port; and
   one or more gas conduits between the reactor vessel's gas exhaust port and the router's reactor return port.
Numbered clause 2. The system of numbered clause 1, and further comprising a check valve to prevent flow from the reactor input port to the reactor return port through the gas router while allowing flow from the reactor return port to the reactor input port through the router.
Numbered clause 3. The system of numbered clause 1 wherein the router has an additional port in fluid communication with the reactor return port, and further comprising a pressure relief valve connected to the additional port to limit the pressure in the path between the reactor return port and the reactor input port.
Numbered clause 4. The system of numbered clause 1 wherein the router further includes a port, designated the process gas port, in fluid communication with the reactor input port through a normally closed (OFF) valve.
Numbered clause 5. The system of numbered clause 1 wherein the lattice includes powdered or sintered metallic material or a deposited layer of metallic material.
Numbered clause 6. The system of numbered clause 1, and further comprising a heater disposed to heat gas before it is introduced into the reactor.
Numbered clause 7. The system of numbered clause 1, and further comprising a heat recovery system disposed to recover heat from gas that leaves the reactor.
Numbered clause 8. The system of numbered clause 1, and further comprising a sonic or ultrasonic transducer for applying sonic or energy to the lattice to generate phonons in the lattice.
Numbered clause 9. The system of numbered clause 1, and further comprising a heater for heating the lattice to generate phonons in the lattice.
Numbered clause 10. The system of numbered clause 1, and further comprising a source for passing current pulses through the lattice to generate phonons in the lattice.
Numbered clause 11. The system of numbered clause 1, and further comprising a check valve for venting gas from a gas return line to maintain a safe operating pressure in the reactor system.
Numbered clause 12. A method of operating a reactor that relies on a reactant gas interacting with a reaction lattice inside the reactor, the method comprising:
   flowing a carrier gas through the reactor to reduce oxides in the lattice;
   thereafter, introducing a mixture of reactant gas and carrier gas into the reactor so that the lattice absorbs the reactant gas and the reactant gas further reduces oxides;
   stimulating the lattice to generate phonons in the lattice to provide energy for reactants in the reactant gas that have been absorbed into the lattice to undergo nuclear reactions.
Numbered clause 13. The method of numbered clause 12, and further comprising controlling the nuclear reactions by one or more of,
   adjusting the degree of stimulation of the lattice material,
   adjusting the pressure and/or flow of the gas mixture introduced into the reactor,
   adjusting the temperature of the gas mixture introduced into the reactor,
   adjusting the relative proportions of reactant gas and carrier gas in the gas mixture introduced into the reactor.
Numbered clause 14. The method of numbered clause 12 wherein adjusting the pressure and/or flow of the gas mixture includes starting and stopping the flow of the gas mixture.
Numbered clause 15. The method of numbered clause 12 wherein the reactant gas contains protium and/or deuterium.
Numbered clause 16. The method of numbered clause 12 wherein the carrier gas is flowed at positive pressure.
Numbered clause 17. The method of numbered clause 12, and further comprising heating the gas before it is introduced into the reactor.
Numbered clause 18. The method of numbered clause 12, and further comprising heating the carrier gas before it is introduced into the reactor, wherein the carrier gas is heated to a temperature sufficient to cause the oxides to break down when the heated carrier gas is flowed through the reactor to reduce oxides.
Numbered clause 19. The method of numbered clause 12, and further comprising recovering heat from gas that leaves the reactor.
Numbered clause 20. The method of numbered clause 12 wherein generating phonons in the lattice comprises applying sonic or ultrasonic energy to the lattice.
Numbered clause 21. The method of numbered clause 12 wherein generating phonons in the lattice comprises heating the lattice.
Numbered clause 22. The method of numbered clause 12 wherein generating phonons in the lattice comprises passing current pulses through the lattice.
Numbered clause 23. The method of numbered clause 12 wherein the reactant gas is naturally occurring hydrogen.
Numbered clause 24. The method of numbered clause 12 wherein the reactant gas contains a level of deuterium and/or tritium that exceeds that in naturally occurring hydrogen.
Numbered clause 25. The method of numbered clause 12 wherein the mixture is caused to exit the reactor and is then recirculated into the reactor, with or without the addition of carrier gas or reactant gas.
Numbered clause 26. The method of numbered clause 12 wherein the reactor has a failsafe configuration that allows substantially only pure carrier gas into the reactor.
Numbered clause 27. The method of numbered clause 12, and further comprising, in response to a pressure above a threshold, venting gas from a gas return line to maintain a safe operating pressure in the reactor system.
Numbered clause 28. The system of numbered clause 1 wherein the reactor vessel is formed with an electrically-conductive outer layer to form a transmission line between the lattice and this outer conductor, for transmission of current spikes through the reactive lattice.
Numbered clause 29. A reactor core comprising:
   an outer metal tubular shell;
   a dielectric layer disposed inboard of an inner surface of the outer metal shell; and
   a layer of lattice material disposed inboard of an inner surface of the dielectric layer.
Numbered clause 30. The reactor core of numbered clause 29 wherein the tubular shell is a right circular cylindrical shell.
Numbered clause 31. The reactor core of numbered clause 29 wherein
   the dielectric layer is formed on the inner surface of the outer metal shell; and
   the layer of lattice material is formed on the inner surface of the dielectric layer.
Numbered clause 32. The reactor core of numbered clause 29 wherein the outer metal shell comprises an outer stainless steel component and an inner copper component.
Numbered clause 33. A reactor core comprising:
   a metal tube;
   a dielectric layer disposed on an outer surface of the metal tube; and
   a layer of lattice material disposed on an outer surface of the dielectric layer.
Numbered clause 34. A method of fabricating a reactor core comprising:
   providing a substrate comprising a sacrificial mandrel disposed between two metal tubes;
   forming a layer of lattice material on the substrate and extending beyond the ends of the mandrel;
   forming a dielectric layer overlying the layer of lattice material and extending beyond the ends of the mandrel;
   forming a metal layer overlying the dielectric layer and extending beyond the ends of the mandrel; and
   removing the mandrel so as to leave a hollow cylindrical structure formed over the ends of the metal tubes with the lattice material disposed on the inner exposed surface of the cylindrical structure.

## Claims

1. A method of operating a reactor having a reactor core comprising an outer metal tubular shell, a dielectric layer disposed inboard of an inner surface of the outer metal shell, and a layer of lattice material disposed inboard of an inner surface of the dielectric layer, wherein the layer of lattice material is accessible through an opening at either end of the outer metal tubular shell and the dielectric layer, the method comprising:
flowing a carrier gas through the reactor to remove free oxygen from the layer of lattice material;
thereafter, introducing reactant gas into the reactor so that the lattice material absorbs the reactant gas and the reactant gas chemically reduces oxides that are present in the lattice; and
stimulating the lattice material to generate phonons in the lattice material to provide energy for reactants in the reactant gas that have been absorbed into the lattice to undergo nuclear reactions.

2. The method of claim 1, further comprising controlling the nuclear reactions by one or more of,
adjusting the degree of stimulation of the lattice material,
adjusting the pressure and/or flow of the gas mixture introduced into the reactor,
adjusting the temperature of the gas mixture introduced into the reactor,
adjusting the relative proportions of reactant gas and carrier gas in the gas mixture introduced into the reactor.

3. The method of claim 2 wherein adjusting the pressure and/or flow of the gas mixture includes starting and stopping the flow of the gas mixture.

4. The method of any of the preceding claims, wherein the reactor has a failsafe configuration that allows substantially only pure carrier gas into the reactor.

5. The method of any of the preceding claims, wherein the reactants include hydrogen isotopes.

6. The method of any of the preceding claims, wherein the lattice material comprises nickel.

7. The method of any of claims 1 to 5, wherein the lattice material comprises palladium.

8. The method of any of the preceding claims, wherein stimulating the lattice material includes transmitting current spikes through a transmission line formed by the lattice material and the outer metal tubular shell.

9. A reactor core comprising:
an outer metal tubular shell;
a dielectric layer disposed inboard of an inner surface of the outer metal shell; and
a layer of lattice material disposed inboard of an inner surface of the dielectric layer,
wherein the layer of lattice material is accessible through at least one opening in the outer metal tubular shell and the dielectric layer.

10. The reactor core of claim 9, wherein
the dielectric layer is formed on the inner surface of the outer metal shell; and
the layer of lattice material is formed on the inner surface of the dielectric layer.

11. The reactor core of claim 9 or claim 10, wherein the outer metal shell comprises an outer stainless steel component and an inner copper component.

12. The reactor core of any of claims 9 to 11, wherein the lattice material comprises nickel.

13. The reactor core of any of claims 9 to 11, wherein the lattice material comprises palladium.

14. A method of fabricating a reactor core comprising:
providing a substrate comprising a sacrificial mandrel disposed between two metal tubes;
forming a layer of lattice material on the substrate and extending beyond the ends of the mandrel;
forming a dielectric layer overlying the layer of lattice material and extending beyond the ends of the mandrel;
forming a metal layer overlying the dielectric layer and extending beyond the ends of the mandrel; and
removing the mandrel so as to leave a hollow cylindrical structure formed over the ends of the metal tubes with the lattice material disposed on the inner exposed surface of the cylindrical structure.
